# EUROPÄISCHE PATENTSCHRIFT

(11) **EP 2 590 037 B1**
(45) Veröffentlichungstag und Bekanntmachung des Hinweises auf die Patenterteilung: **08.08.2018**
(21) Anmeldenummer: 11187882.3
(22) Anmeldetag: 04.11.2011
(51) Int. Cl.: G06F 11/22, G05B 19/042, G06F 11/10

(54) **Speicherüberprüfung durch Boot-Loader beim Starten eines Feldgeräts**
Memory check through Boot-Loader while starting a field device
Test de la mémoire avec un Boot-Loader par démarrant d'un appareil de terrain

(43) Veröffentlichungstag der Anmeldung: 08.05.2013
(73) Patentinhaber: VEGA Grieshaber KG, 77709 Wolfach (DE)
(72) Erfinder: Gaiser, Martin, 72275 Alpirsbach (DE); Isenmann, Andreas, 77716 Haslach i.K. (DE)
(74) Vertreter: Maiwald Patent- und Rechtsanwaltsgesellschaft mbH

(56) Entgegenhaltungen:
- DE-A1- 4 122 371
- DE-A1- 10 030 991
- DE-A1- 19 642 737
- DE-A1- 19 909 051
- DE-A1- 19 946 096
- DE-A1-102005 051 769
- US-A- 5 542 082
- US-A1- 2004 181 716
- US-A1- 2005 033 952
- US-B1- 7 555 677

## Beschreibung

### GEBIET DER ERFINDUNG

Die Erfindung betrifft ein Verfahren, ein Computerprogramm und ein computerlesbares Medium zum Starten eines Feldgeräts, sowie ein Feldgerät.

### HINTERGRUND DER ERFINDUNG

Feldgeräte zum Messen von physikalischen Größen in industriellen Anlage umfassen häufig eine Steuerung, die einen elektronischen Prozessor umfasst mit dem ein Sensor des Feldgeräts gesteuert und ein erfasster Messwert der physikalischen Größe weiterverarbeitet werden kann. Die entsprechende Systemsoftware ist dabei in der Regel in einem nicht-flüchtigen Speicher in der Steuerung gespeichert.

Bestimmte Typen von Feldgeräten sind dazu ausgeführt nur zu bestimmten Zeitpunkten aktiv zu werden und beispielsweise eine Messung durchzuführen. Auf diese Weise kann Energie gespart werden, die unter Umständen nur von einer Batterie zur Verfügung gestellt werden kann. Vor jedem Messvorgang wird dann das Feldgerät gestartet und die Steuerung durchläuft einen Boot-Vorgang, bei dem auch eine Überprüfung des Speichers durchgeführt wird, um zu überprüfen, ob die Systemsoftware in der Zwischenzeit nicht korrumpiert wurde.

Zur Überprüfung des Speichers kann eine CRC-Prüfung des Speichers durchgeführt werden. Dies ist in der Regel sehr zeitaufwändig und der Systemstart dauert entsprechend lange. DE 199 09 051 A1 offenbart ein Verfahren zur Fehlererfassung und Korrektur des Software-Codes in einem Feldgerät, das einen Boot-Speicherbereich und einen Betriebsspeicherbereich umfasst, wobei vor dem Ausführen der Betriebsfunktion, der Speicher überprüft wird.

DE 100 30 991 A1 offenbart ein Verfahren zur Ermittlung einer Zeitdauer oder eines Bedienmusters zur Bedienung eines Watchdogs von unterschiedlichen Einrichtungen einer Steuer- oder Sicherheitsschaltung eines Kraftfahrzeugs. DE 100 30 991 A1 offenbart keine Überprüfung des Speicherbereichs aufgrund einer vorherigen Aktivierung des Watchdogs.

US 2004/181716 A1 offenbart ein Verfahren zum Starten eines Computer-Systems mit einem Boot-Speicherbereich und einem Betriebsspeicherbereich, wobei diese in Abschnitte unterteilt sind und die Abschnitte abwechselnd überprüft werden.

### ZUSAMMENFASSUNG DER ERFINDUNG

Es ist Aufgabe der Erfindung ein energiesparendes und schnelles Feldgerät bereitzustellen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein Verfahren zum Starten eines Feldgeräts. Unter einem Feldgerät kann dabei ein Messgerät verstanden werden, das in räumlicher Nähe einer industriellen Anlage (beispielsweise ein Tank oder eine Fluidleitung) oder an bzw. in der industriellen Anlage angeordnet ist und das dazu ausgeführt ist, eine physikalische Größe der industriellen Anlage zu messen, zu erfassen und/oder weiterzuverarbeiten. Insbesondere kann das Feldgerät dazu ausgeführt sein, eine Druck-, Durchfluss und/oder Füllstandsmessung durchzuführen. Das Feldgerät kann einen Speicher aufweisen, der einen Boot-Speicherbereich umfasst, in dem eine Boot-Funktion gespeichert ist, und einen Betriebsspeicherbereich, in dem eine Betriebsfunktion gespeichert ist. Soll die Systemsoftware eines Feldgeräts austauschbar sein, beispielsweise um bestimmte Programm-Funktionen hinzuzufügen oder zu aktualisieren, kann die Systemsoftware in einen Bootteil und einen Main- bzw. Betriebsteil aufgeteilt werden. Die Boot-Funktion kann dann Bestandteil des Bootteils und die Betriebsfunktion Bestandteil des Betriebsteils sein. Der Speicher kann dazu in einen Boot-Speicherbereich, in dem der Bootteil gespeichert ist, und einen Betriebsspeicherbereich, in dem der Betriebsteil, gespeichert ist, aufgeteilt werden. Die eigentliche Mess- und Verarbeitungsfunktionalität des Feldgeräts befindet sich dann im Betriebsteil, der auch austauschbar ausgeführt sein soll. Beispielsweise kann der Betriebsspeicherbereich überschrieben werden und auf diese Weise ein neuer Betriebsteil im Feldgerät abgespeichert werden. Der nicht-flüchtige Speicher kann beispielsweise einen FLASH-Speicher umfassen, in dem sich der Boot-Speicherbereich und der Betriebsspeicherbereich befinden.

Gemäß einer Ausführungsform der Erfindung umfasst das Verfahren die Schritte von: Ausführen der Bootfunktion; Feststellen, ob eine Speicherprüfung des Betriebsspeicherbereichs durchgeführt werden soll; Durchführen einer Speicherprüfung des Betriebsspeicherbereichs, wenn festgestellt wurde, dass eine Speicherprüfung durchgeführt werden soll; und Ausführen der Betriebsfunktion.

Das Feldgerät kann also gestartet werden, indem der Bootteil beim Einschalten aktiviert wird und dieser kann dann überprüfen, ob ein gültiger Betriebsteil vorhanden ist und diesen dann gegebenenfalls starten. In diesem Fall muss die Speicherprüfung, mit der überprüft werden soll, ob der Betriebsteil der Systemsoftware und insbesondere die Betriebsfunktion korrekt gespeichert sind, nur dann durchgeführt werden, wenn dies notwendig erscheint. Auf diese Weise kann die Startvorgang verkürzt und beschleunigt sowie der Energieverbrauch des Feldgeräts vermindert werden.

Da sich in der Regel der Code des Betriebsteils nicht ändert, ist es normalerweise nicht erforderlich bei jedem Startvorgang des Feldgeräts eine Speicherprüfung durchzuführen. Wenn darauf verzichtet wird, beschleunigt sich der Startvorgang merklich und dadurch kann beispielsweise der Messwert bei einem Sensor schneller zur Verfügung stehen.

Gemäß einer Ausführungsform der Erfindung umfasst die Speicherprüfung eine CRC-Prüfung. Mit einer CRC-Prüfung bzw. ein "cyclic redundancy check", d.h. einer zyklische Redundanzprüfung kann überprüft werden, ob ein Speicherbereich verändert wurde. Dazu wird eine Prüfsumme aus dem aktuellen Inhalt des Speicherbereichs berechnet und mit einer Prüfsumme verglichen, die zu einem früheren Zeitpunkt berechnet wurde. Weichen die beiden Prüfsummen voneinander ab, kann davon ausgegangen werden, dass sich der Inhalt des Speicherbereichs verändert hat.

Gemäß einer Ausführungsform der Erfindung wird die Boot-Funktion ausgeführt, wenn das Feldgerät aktiviert wird. Beispielweise befindet sich das Feldgerät die meiste Zeit in einem Schlafmodus oder im ausgeschalteten Zustand und wird durch ein externes Signal geweckt bzw. eingeschaltet. Nach dem externen Aktivieren kann dann der verkürzte Startvorgang durchgeführt werden. Insbesondere bei einem Feldgerät mit Energiemanagement, das beispielsweise seine Energie aus einer Batterie bezieht, kann sich dies positiv auswirken, da der Startvorgang nach jedem Aufwachen erfolgt und damit verkürzt werden kann.

Gemäß einer Ausführungsform der Erfindung wird festgestellt, dass die Speicherprüfung durchgeführt werden soll, wenn ein erster Zähler und ein zweiter Zähler, die in einem nicht-flüchtigen Speicherbereich gespeichert sind, nicht übereinstimmen. Die beiden Zähler können in einem EPROM gespeichert werden. Beispielsweise wird nach dem Ausführen der Boot-Funktion der erste Zähler inkrementiert und nach dem Initialisieren oder Ausführen der Betriebsfunktion der zweite Zähler inkrementiert. Tritt kein Programmfehler auf und haben die beiden Zähler vor dem Startvorgang übereingestimmt, stimmen die beiden Zähler auch danach überein. Ist dies nicht der Fall kann davon ausgegangen werden, dass ein Fehler während des Ausführens der Betriebsfunktion aufgetreten ist und eine Speicherprüfung durchgeführt werden sollte.

Im Feldgerät können also zwei Zähler implementiert sein. Der erste Zähler erfasst die Anzahl der Durchläufe der Boot-Funktion im Bootteil und der zweite Zähler die Anzahl erfolgreicher Starts des Main-Teils durch die Betriebsfunktion. Solange diese Zähler gleich sind, wird angenommen, dass der Bootteil jedes Mal den Betriebsteil erfolgreich starten konnte und es kann daher beim Startvorgang auf die CRC - Prüfung des Betriebsteils verzichtet werden.

Gemäß einer Ausführungsform der Erfindung umfasst das Verfahren weiter den Schritt von: Festsetzen, dass beim nächsten Start keine Speicherprüfung des Betriebsspeicherbereichs durchgeführt wird, wenn der Betriebsspeicherbereich überprüft wurde. Dies kann beispielsweise dadurch geschehen, dass der erste Zähler und der zweite Zähler auf den gleichen Wert, beispielsweise 0, zurückgesetzt werden. Dies kann beispielsweise nach einer erfolgreichen Speicherprüfung geschehen.

Gemäß einer Ausführungsform der Erfindung umfasst das Verfahren weiter den Schritt einer zyklischen Speicherprüfung des Betriebsspeicherbereichs. Nach dem Startvorgang kann die Speicherprüfung (auch wenn die beiden Zähler übereinstimmen) in regelmäßigen Abständen, d.h. zyklisch, durchgeführt werden. Dies kann beispielsweise dann erfolgen, wenn das Feldgerät auf weitere Daten des Sensors wartet und ohnehin aktiv ist. Außerdem kann es vorkommen, dass Bytes im Main-Teil geändert sind, die den Start des Betriebsteils durch die Betriebsfunktion zwar nicht verhindern, aber dennoch zu Fehlern während der Laufzeit führen können. Um dies zu erkennen, kann die Speicherprüfung durch einen spezielle Diagnose-Task (bzw. Diagnose-Funktion) zyklisch während der Laufzeit des Feldgeräts durchgeführt werden.

Gemäß einer Ausführungsform der Erfindung umfasst das Verfahren weiter die Schritte von: Aktivieren eines Watchdogs bei einem Fehlerfall des Feldgeräts; Festsetzten, dass beim nächsten Start des Feldgeräts eine Speicherprüfung des Betriebsbereichs durchgeführt werden soll, wenn der Watchdog aktiviert wurde; und Zurücksetzen des Feldgeräts durch den Watchdog, so dass ein Neustart des Feldgeräts durchgeführt wird. Dies kann dadurch erfolgen, dass der erster Zähler und der zweite Zähler auf unterschiedliche Werte gesetzt werden, beispielsweise auf 1 und 0.

Ein Watchdog (Wachhund-Vorrichtung) kann ein Teil des Prozessors oder auch ein gesonderte Komponente des Feldgeräts sein, die überwacht, ob der Prozessor korrekt arbeitet. Beispielsweise muss der Prozessor in regelmäßigen Abständen ein Signal an den Watchdog senden. Bleibt dieses Signal aus, wenn etwa der Prozessor abgestürzt ist oder sich in einer Endlos schleife befindet, geht der Watchdog von einem Fehler aus und startet den Prozessor erneut, der dann den Startvorgang durchführt.

Wird der Watchdog aktiviert, nachdem die Boot-Funktion und die Betriebsfunktion erfolgreich durchgeführt worden sind, können die beiden Zähler auch aktiv durch den Watchdog auf unterschiedliche Werte gesetzt werden, so dass während des Startvorgangs eine Speicherüberprüfung des Betriebsspeichebereichs durchgeführt wird.

Gemäß einer Ausführungsform der Erfindung wird ein IO-Signal an den Prozessor des Feldgeräts durch den Watchdog auf einen definierten Pegel gesetzt. Um ein durch einen Watchdog ausgelösten Neustart zu erkennen, kann zudem ein Signalpegel Verwendung finden. Hierbei sorgt der Watchdog beim Auslösen des Neustarts dafür, dass ein Signalpegel auf ein definiertes Level bzw. auf einen definierten Pegel gesetzt wird. Sobald der Bootteil diesen definierten Pegel erkennt, werden die zwei Überwachungszähler vom Bootteil auf unterschiedliche Werte gesetzt, was dazu führt, dass die Speicherüberprüfung durchgeführt wird.

Gemäß einer Ausführungsform der Erfindung wird festgestellt, dass die Speicherprüfung durchgeführt werden soll, wenn ein IO-Signal des Watchdogs einen definierten Signalpegel aufweist. Alternativ oder zusätzlich zu den Zählern kann der Watchdog auch ein Signalpegel auf einen definierten Level setzen, so dass der Prozessor beim Neustart die Aktivität des Watchdogs anhand dieses Pegels erkennen und somit eine Speicherprüfung auslösen kann.

Ein weiterer Aspekt der Erfindung betrifft ein Computerprogramm, das, wenn es auf einem Prozessor ausgeführt wird, den Prozessor anleitet, die Schritte des Verfahrens so wie obenstehend und untenstehend beschrieben durchzuführen. Das Computerprogramm kann Funktionen aus dem Boot-Speicherbereich und dem Betriebsspeicherbereich umfassen.

Ein weiterer Aspekt der Erfindung betrifft ein computerlesbares Medium, auf dem ein derartiges Computerprogramm gespeichert ist. Das computerlesbare Medium kann beispielsweise der nicht-flüchtige Speicher des Feldgeräts sein. Ein computerlesbares Medium kann aber auch eine Diskette, eine Harddisk, ein USB-Speichergerät, ein RAM, ein ROM, ein FLASH oder ein EPROM sein. Ein computerlesbares Medium kann auch ein Datenkommunikationsnetzwerk, wie beispielsweise das Internet, das den Download eines Programmcodes ermöglicht, sein.

Ein weiterer Aspekt der Erfindung betrifft ein Feldgerät zur Druck- und/oder Füllstandsmessung, so wie es obenstehend und untenstehend beschrieben ist. Es ist zu verstehen, dass Merkmale des Verfahrens auch Merkmale des Feldgeräts sein können und umgekehrt.

Gemäß einer Ausführungsform der Erfindung umfasst das Feldgerät eine Steuerung, die dazu ausgeführt ist, das obenstehend und untenstehend beschriebene Verfahren durchzuführen. Das Feldgerät kann einen Sensor umfassen, der dazu ausgeführt ist, eine Druck-, Durchfluss- und/oder Füllstandsmessung durchzuführen.

Zusammenfassend kann das Feldgerät mit dem beschriebenen Verfahren überwachen, ob ein Systemstart erfolgreich war oder nicht. Wenn der vorhergehende Systemstart erfolgreich war, kann beim aktuellen Systemstart auf eine CRC-Prüfung des Betriebs-Teils beim Ausführen des Bootteils verzichtet und sofort der Betriebsteil gestartet werden. Wenn auf diese Weise ein nicht lauffähiger Betriebsteil gestartet wird, kann dies zu einem Neustart des Feldgeräts führen (beispielsweise ausgelöst durch einen vorhandenen Watchdog) und für den nächsten Systemstart kann die CRC-Prüfung wieder aktiviert werden.

Zwei im Feldgerät gespeicherte Zähler können dazu verwendet werden, den Startvorgang zu überwachen. Sobald die beiden Zähler auseinander laufen, war der Startvorgang entweder nicht erfolgreich oder der Startvorgang wurde beispielsweise durch Spannungsausfall abgebrochen. In diesem Fall kann die CRC-Prüfung wieder aktiviert werden und der Bootteil startet den Main-Teil erst wieder, wenn diese Prüfung erfolgreich ist. Zu diesem Zeitpunkt können dann die beiden Zähler wieder auf 0 gesetzt werden, so dass das beschleunigte Bootverfahren wieder aktiv ist.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt schematisch ein Feldgerät gemäß einer Ausführungsform der Erfindung.
Fig. 2 zeigt ein Flussdiagramm für ein Verfahren zum Starten eines Feldgeräts gemäß einer Ausführungsform der Erfindung.

### DETAILIERTE BESCHREIBUNG VON AUSFÜHRUNGSBEISPIELEN

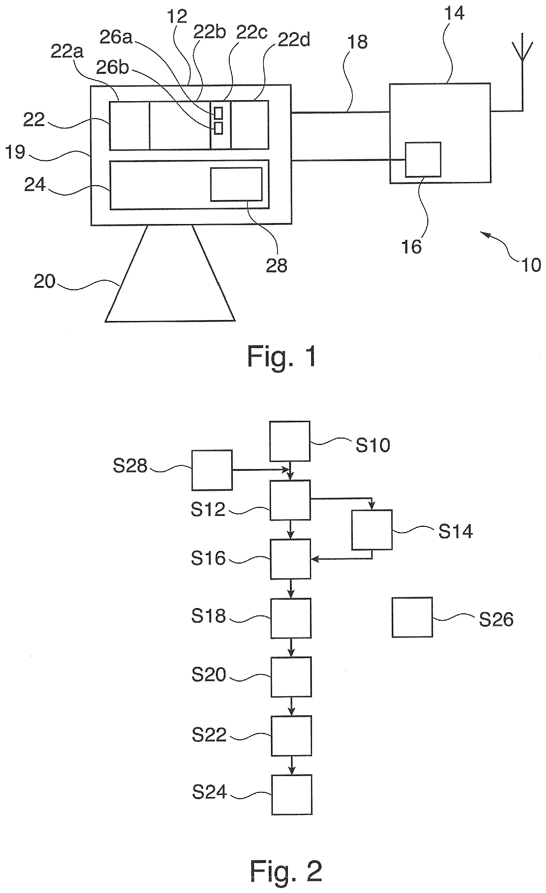

Fig. 1 zeigt ein System 10, das ein Feldgerät 12 und ein damit verbundenes Modem 14 umfasst. Das System 10 kann beispielsweise an einer unzugänglichen Stelle an einem Tank angebracht sein und deshalb autark, d.h. ohne Stromversorgung von Außen arbeiten. Beispielsweise misst das System 10 jede Stunde einen Messwert, zum Beispiel einen Füllstand oder einen Druck im Tank und übermittelt diesen über Funk an ein weiteres zentrales System.

Das Modem 14 umfasst eine Batterie 16 zur Stromversorgung des Systems 10 und ist dazu ausgeführt Messwerte 18 von den Feldgerät12 zu empfangen und über Funk weiter zu übertragen.

Das Feldgerät 12 umfasst eine Steuerung 19 und einen Sensor 20, der von der Steuerung 20 angesteuert wird. Das Feldgerät 12 kann über den Sensor 20, beispielsweise ein Füllstands-, Durchfluss- oder Drucksensor einen Messwert 18 ermitteln und an das Modem 14 übertragen.

Die Steuerung des Feldgeräts 12 umfasst einen Prozessor 24 und einen Speicher 22, auf den der Prozessor 24 zugreifen kann. Der Speicher 22 umfasst nicht-flüchtige Speicherbereiche 22a, 22b, 22c und einen flüchtigen Speicherbereich 22d. Im Gegenteil zum flüchtigen Speicherbereich 22d, verlieren die nicht-flüchtigen Speicherbereiche 22a, 22b, 22c die darin gespeicherten Daten nicht, wenn das Feldgerät 12 nicht mit Strom versorgt wird.

In den Speicherbereichen 22a und 22b wird Software gespeichert, die von dem Prozessor 24 ausgeführt werden kann. Dabei befindet sich im Boot-Speicherbereich 22a die Boot-Software, die in der Regel nicht konfektionierbar ist, sondern bei allen Feldgeräten 12 des gleichen Typs identisch ist. Im Hauptspeicherbereich 22b befindet sich die Betriebssoftware, die beispielsweise die Steuerung des Sensors 20 und das Übermitteln der Daten 18 übernimmt und die an spezielle Anwendungen konfektionierbar ist. Für die Speicherbereiche 22a, 22b kann ein FLASH-Speicher verwendet werden. Auf diese Weise kann die Betriebssoftware im Betriebsspeicherbereich 22b durch Überschreiben aktualisiert werden.

Der Speicherbereich 22c dient zum Speichern von Daten, die auch beim nächsten Start des Feldgeräts 12 zur Verfügung stehen sollen, beispielsweise der erste Zähler 26a und der zweite Zähler 26b. Für den Speicherbereich 22c kann ein EPROM-Speicher verwendet werden. Der Speicherbereich 22d ist der RAM-Speicher den der Prozessor 24 während des Betriebs zum Zwischenspeichern von Daten verwenden kann.

Der Prozessor 24 umfasst einen Hardware-Watchdog (Wachhund) 28, der überwacht, ob das Feldgerät 12 korrekt arbeitet. Dazu muss der Prozessor 24 dem Watchdog 28 in regelmäßigen Abständen ein Signal übermitteln. Bleibt dieses Signal aus, geht der Watchdog davon aus, dass der Prozessor abgestürzt ist bzw. sich in einer Endlosschleife befindet und startet das Feldgerät 12 erneut, d.h. führt einen Reset des Prozessor 24 durch.

Alle Elemente 22a, 22b, 22c, 22d, 24, 28 des Feldgeräts 12 können auf einem einzigen Chip ausgeführt sein. Es ist jedoch auch möglich, dass einzelne Elemente mit getrennten Bausteinen ausgeführt sind.

Die Fig. 2 zeigt ein Verfahren zum Starten und Betreiben des Feldgeräts 12, das von dem System 10 autonom durchgeführt werden kann.

Im Schritt S10 beginnt das Modem 14, das Feldgerät 12 mit Strom zu versorgen. Dies kann beispielsweise durch einen Timer (Zeitgeber) des Modems 14 ausgelöst werden.

Im Schritt S12 beginnt der Prozessor 24 zu arbeiten und ruft die Boot-Funktion im Boot-Speicher 22a auf. Am Ende überprüft die Boot-Funktion, ob die Zähler 26a und 26b übereinstimmen.

Ist dies nicht der Fall, führt die Boot-Funktion im Schritt S14 eine CRC-Prüfung des Hauptspeicherbereichs 22b durch und setzt den ersten Zähler 26a und den zweiten Zähler 26b auf 0 zurück. Ergibt die CRC-Prüfung, dass die Daten im Hauptspeicherbereich 22b beschädigt sind, kann eine entsprechende Meldung an das Modem 14 bzw. das nachgelagerte System erfolgen. Das Feldgerät 12 bricht den Start ab, der Bootteil bleibt aber aktiv, so dass gegebenenfalls ein Update der Software für den Hauptspeicherbereich durchgeführt werden kann.

Danach erhöht die Boot-Funktion im Schritt S16 den ersten Zähler 26a. Die beiden Zähler 26a, 26b haben nun unterschiedliche Werte.

Im Schritt S18 ruft die Boot-Funktion, die Betriebssoftware im Hauptspeicherbereich 22b auf. Die Betriebssoftware führ nun ihre eigenen Initialisierungsroutinen, wie etwa ein Betriebsfunktion zum Start der Betriebssoftware, durch.

Im Schritt S20, wenn auch die Betriebssoftware ihren Initialisierungsvorgang erfolgreich abgeschlossen hat, wird der zweite Zähler 26b von der Betriebssoftware erhöht, beispielsweise nach dem Initialisieren oder Ausführen der Betriebsfunktion. Sollte bis zum Abschalten des Feldgeräts 24 keine Probleme mehr auftreten, sind die beiden Zähler 26a, 26b gleich, was dazu führt, dass beim nächsten Start keine CRC-Prüfung durchgeführt wird.

Im Schritt S22 wird der Sensor 20 dann durch die Betriebssoftware bzw. die Steuerung 19 derart angesteuert, das er einen Messwert 18 erzeugt, der dann an das Modem 14 übermittelt wird.

Im Schritt S24, nach dem Erhalt des Messwerts 24, unterbricht das Modem 14 die Stromversorgung des Feldgeräts 12.

Nach dem Bootvorgang bzw. Startvorgang in den Schritten S12 bis S16 ruft der Prozessor 24 in regelmäßigen Abständen im Schritt S26 eine Diagnose-Funktion auf, die die CRC-Prüfung des Hauptspeichers 22b durchführt. Ergibt die CRC-Prüfung, dass die Daten im Hauptspeicher 22b beschädigt sind, kann eine entsprechende Meldung an das Modem 14 erfolgen. In diesem Fall werden die Zähler 26a und 26b auf unterschiedliche Werte gesetzt und ein Neustart ausgelöst.

Spätestens ab dem Zeitpunkt, ab dem der Prozessor 24 im Schritt S12 zu arbeiten beginnt, muss er an den Watchdog 28 in regelmäßigen Abständen ein Signal senden. Dies verhindert, dass der Watchdog 28 aktiv wird. Entfällt dieses Signal (Absturz des Prozessors, Endlosschleife) setzt im Schritt S28 der Watchdog 28 die beiden Zähler 26a, 26b auf unterschiedliche Werte und startet den Prozessor 24 erneut, so dass das Verfahren im Schritt S12 fortgesetzt und anschließend die CRC-Prüfung ausgeführt wird. Alternativ zu unterschiedlichen Zählerwerten kann der Watchdog 28 auch ein IO-Signal auf einen definierten Pegel setzen, welches im Bootteil vom Prozessor 24 erkannt und ausgewertet wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Starten eines Feldgeräts (12) zur Druck-, Durchfluss- und/oder Füllstandsmessung,
wobei das Feldgerät (12) einen Speicher (22) aufweist, der einen Boot-Speicherbereich (22a) umfasst, in dem eine Boot-Funktion gespeichert ist, und einen Betriebsspeicherbereich (22b), in dem eine Betriebsfunktion gespeichert ist,
das Verfahren umfassend die Schritte:
Aktivieren eines Watchdogs (28) bei einem Fehlerfall des Feldgeräts (12);
Festsetzten, dass beim nächsten Start des Feldgeräts (12) eine Speicherprüfung des Betriebsbereichs (22b) durchgeführt werden soll, wenn der Watchdog (28) aktiviert wurde;
Zurücksetzen des Feldgeräts (12) durch den Watchdog (28), so dass ein Neustart des Feldgeräts (12) durchgeführt wird;
Ausführen der Bootfunktion;
Feststellen, ob eine Speicherprüfung des Betriebsspeicherbereichs (22b) durchgeführt werden soll;
Durchführen einer Speicherprüfung des Betriebsspeicherbereichs (22b), wenn festgestellt wurde, dass eine Speicherprüfung durchgeführt werden soll;
Ausführen der Betriebsfunktion.

2. Verfahren nach Anspruch 1,
wobei die Speicherprüfung eine CRC-Prüfung umfasst.

3. Verfahren nach einem der Ansprüche 1 oder 2,
wobei die Boot-Funktion ausgeführt wird, wenn das Feldgerät (12) aktiviert wird.

4. Verfahren nach einem der vorhergehenden Ansprüche,
wobei festgestellt wird, dass die Speicherprüfung durchgeführt werden soll, wenn ein erster Zähler (26a) und ein zweiter Zähler (26b), die in einem nicht-flüchtigen Speicherbereich (22c) gespeichert sind, nicht übereinstimmen.

5. Verfahren nach Anspruch 4,
wobei nach dem Ausführen der Boot-Funktion der erste Zähler (26a) inkrementiert wird;
wobei nach dem Initialisieren der Betriebsfunktion der zweite Zähler inkrementiert (26b) wird.

6. Verfahren nach einem der vorhergehenden Ansprüche,
wobei festgestellt wird dass die Speicherprüfung durchgeführt werden soll, wenn ein Signal des Watchdogs einen definierten Signalpegel aufweist.

7. Verfahren nach einem der vorhergehenden Ansprüche, weiter umfassend den Schritt:
Festsetzen, dass beim nächsten Start keine Speicherprüfung des Betriebsspeicherbereichs (22b) durchgeführt wird, wenn der Betriebsspeicherbereich überprüft wurde.

8. Verfahren nach Anspruch 7,
wobei ein erster Zähler (26a) und ein zweiter Zähler (26b) auf den gleichen Wert zurückgesetzt werden.

9. Verfahren nach einem der vorhergehenden Ansprüche, weiter umfassend den Schritt: zyklische Speicherprüfung des Betriebsspeicherbereichs (22b).

10. Verfahren nach einem der vorhergehenden Ansprüche,
wobei ein erster Zähler (26a) und ein zweiter Zähler (26b) durch den Watchdog (28) auf unterschiedliche Werte gesetzt werden, um festzusetzen, dass eine Speicherprüfung durchgeführt werden soll.

11. Verfahren nach einem der vorhergehenden Ansprüche,
wobei ein IO-Signal an den Prozessor des Feldgeräts durch den Watchdog (28) auf einen definierten Pegel gesetzt wird, um festzusetzen, dass eine Speicherprüfung durchgeführt werden soll.

12. Computerprogramm, das, wenn es auf einem Prozessor (24) ausgeführt wird, den Prozessor anleitet, die Schritte des Verfahrens nach einem der Ansprüche 1 bis 11 durchzuführen.

13. Computerlesbares Medium (22), auf dem ein Computerprogramm nach Anspruch 12 gespeichert ist.

14. Feldgerät (12) zur Druck-, Durchfluss- und/oder Füllstandsmessung, umfassend:
eine Steuerung (19), die dazu ausgeführt ist, das Verfahren nach einem der Ansprüche 1 bis 11 durchzuführen;
einen Sensor (20), der dazu ausgeführt ist, eine Druck-, Durchfluss- und/oder Füllstandsmessung durchzuführen.

## Claims

1. A method for starting a field device (12) for at least one of pressure measurement, flow measurement and fill level measurement,
wherein the field device (12) comprises a memory (22) that includes a boot memory region (22a) in which a boot function is stored, and an operating memory region (22b) in which an operating function is stored,
with the method comprising the steps of:
activating a watchdog (28) in the case of an error of the field device (12);
setting that during the next start of the field device (12) a memory check of the operating region (22b) is to be carried out when the watchdog (28) has been activated;
resetting the field device (12) by the watchdog (28) so that a restart of the field device (12) is carried out.
carrying out the boot function;
determining whether a memory check of the operating memory region (22b) is to be carried out;
carrying out a memory check of the operating memory region (22b) when it has been determined that a memory check is to be carried out;
carrying out the operating function.

2. The method of claim 1,
wherein the memory check comprises a cyclic redundancy check.

3. The method of claim 1 or 2,
wherein the boot function is carried out when the field device (12) is activated.

4. The method of one of the previous claims,
wherein it is determined that the memory check is to be carried out when a first counter (26a) and a second counter (26b), which are stored in a non-volatile memory region (22c), do not match.

5. The method of claim 4,
wherein after the boot function has been carried out the first counter (26a) is incremented;
wherein after the operating function has been initialized the second counter (26b) is incremented.

6. The method of one of the previous claims,
wherein it is determined that the memory check is to be carried out when a signal of the watchdog has a defined signal level.

7. The method of one of the previous claims, further comprising the step of:
setting that during the next start no memory check of the operating memory region (22b) is carried out when the operating memory region was checked.

8. The method of claim 7,
wherein a first counter (26a) and a second counter (26b) are reset to the same value.

9. The method of one of the previous claims, further comprising the step of:
cyclically checking the memory of the operating memory region (22b).

10. The method of one of the previous claims,
wherein a first counter (26a) and a second counter (26b) are set to different values by the watchdog (28) for setting that a memory check is to be carried out.

11. The method of one of the previous claims,
wherein an IO-signal to the processor of the field device is set to a defined level by the watchdog (28) for setting that a memory check is to be carried out.

12. A computer program which, when being executed on a processor (24), instructs the processor to carry out the steps of the method according to one of the claims 1 to 11.

13. A computer-readable medium (22) in which a computer program according to claim 12 is stored.

14. A field device (12) for at least one of pressure measurement, flow measurement and fill level measurement, comprising:
a controller (19) designed for carrying out the method according to one of the claim 1 to 11;
a sensor (20) designed for carrying out at least one of pressure measurement, flow measurement and fill level measurement.

## Revendications

1. Procédé pour démarrer un appareil de terrain (12) pour mesurer une pression, un débit et/ou un niveau de remplissage,
dans lequel l'appareil de terrain (12) comporte une mémoire (22) qui comprend une région de mémoire d'amorçage (22a) dans laquelle est mémorisée une fonction d'amorçage, et une région de mémoire d'exploitation (22b) dans laquelle est mémorisée une fonction d'exploitation,
le procédé comportant les étapes consistant à :
activer un chien de garde (38) en cas d'erreur de l'appareil de terrain (12),
établir qu'un contrôle de mémoire de la région d'exploitation (22b) doit être effectué au prochain démarrage de l'appareil de terrain (12) lorsque le chien de garde (28) a été activé,
réinitialiser l'appareil de terrain (12) par le chien de garde (28) de sorte qu'un redémarrage de l'appareil de terrain est réalisé,
exécuter la fonction d'amorçage,
déterminer si un contrôle de mémoire de la région de mémoire d'exploitation (22b) doit être réalisé,
effectuer un contrôle de mémoire de la région de mémoire d'exploitation (22b) lorsqu'il a été déterminé qu'un contrôle de mémoire doit être effectué,
exécuter la fonction d'exploitation.

2. Procédé selon la revendication 1,
dans lequel le contrôle de mémoire inclut un contrôle de redondance cyclique (CRC).

3. Procédé selon l'une des revendications 1 ou 2,
dans lequel la fonction d'amorçage est exécutée lorsque l'appareil de terrain (12) est activé.

4. Procédé selon l'une des revendications précédentes,
dans lequel il est déterminé que le contrôle de mémoire doit être réalisé lorsqu'un premier compteur (26a) et un second compteur (26b) qui sont enregistrés dans une région de mémoire non volatile (22c), ne correspondent pas.

5. Procédé selon la revendication 4,
dans lequel, après l'exécution de la fonction d'amorçage, le premier compteur (26a) est incrémenté,
dans lequel, après l'initialisation de la fonction d'exploitation, le second compteur (26b) est incrémenté.

6. Procédé selon l'une des revendications précédentes,
dans lequel il est déterminé que le contrôle de mémoire doit être réalisé lorsqu'un signal du chien de garde comporte un niveau de signal défini.

7. Procédé selon l'une des revendications précédentes, comportant en outre l'étape consistant à :
établir qu'aucun contrôle de mémoire de la région de mémoire d'exploitation (22b) n'est réalisé au prochain démarrage lorsque la région de mémoire d'exploitation a été contrôlée.

8. Procédé selon la revendication 7,
dans lequel un premier compteur (26a) et un second compteur (26b) sont réinitialisés à la même valeur.

9. Procédé selon l'une des revendications précédentes, comportant en outre l'étape consistant à :
effectuer un contrôle de mémoire cyclique de la région de mémoire d'exploitation (22b).

10. Procédé selon l'une quelconque des revendications précédentes,
dans lequel un premier compteur (26a) et un second compteur (26b) sont fixés par le chien de garde (28) à des valeurs différentes afin d'établir qu'un contrôle de mémoire doit être effectué.

11. Procédé selon l'une des revendications précédentes,
dans lequel un signal d'entrée-sortie IO sur le processeur de l'appareil de terrain est fixé par le chien de garde (28) à un niveau défini afin d'établir qu'un contrôle de mémoire doit être effectué.

12. Programme informatique qui, lorsqu'il est exécuté sur un processeur (24), amène le processeur à exécuter les étapes du procédé selon l'une des revendications 1 à 11.

13. Support lisible par ordinateur (22) sur lequel est mémorisé un programme informatique selon la revendication 12.

14. Appareil de terrain (12) pour mesurer une pression, un débit et/ou un niveau de remplissage, comportant :
une commande (19) configurée pour mettre en oeuvre le procédé selon l'une des revendications 1 à 11,
un capteur (20) configuré pour réaliser une mesure de pression, de débit et/ou de niveau de remplissage.
